# EUROPEAN PATENT APPLICATION

(11) **EP 0 947 387 A1**
(43) Date of publication of application: **06.10.1999**
(21) Application number: 99105839.7
(22) Date of filing: 23.03.1999
(51) Int. Cl.: B60R 7/08

(54) **Burglary-proof convenience key-holding receptacle for motor-vehicles**

(30) Priority: 30.03.1998 IT PN980021 U
(71) Applicant: Crescenzi, Renzo, 33084 Cordenons (PN) (IT)
(72) Inventor: Crescenzi, Renzo, 33084 Cordenons (PN) (IT)
(74) Representative: Dalla Rosa, Adriano

(57) **Abstract**

Burglary-proof convenience receptacle for holding ignition keys of motor vehicles, adapted to be used in particular by car dealers, constituted by a box-like case (15) and an enclosing cover (16), in which there are provided support means (24; 38, 40) co-operating with the case (15) and adapted to enable said case to be removably applied on to the window-pane of the door (11) of each motor-vehicle, on the inside of the latter, wherein said receptacle enables the ignition and driving key of each motor-vehicle to be stored therein, so that no time needs to be wasted for each time looking for it, while at the same time preventing it, and the related motor-vehicle, from being stolen.

## Description

The present invention refers to a burglary-proof convenience key-holding receptacle for motor-vehicles, adapted in particular for use by dealers selling new and/or used motor-vehicles.

At present, it is largely customary for dealers handling new motor-vehicles (such as for instance concessionary agents) and/or used motor-vehicles to put the ignition keys of the different motor-vehicles existing at their premises together into bunches of keys which are then held in view by hanging them to appropriate panels, so that, when each such motor-vehicle needs to be moved or has to be delivered to the customer, the corresponding key has to be picked up from such a panel for the related motor-vehicle to be then capable of being used.

In the current practice, however, this manner of holding the keys has on the one side eventually proven scarcely practical and rather laborious, since for the desired key to be found out it is quite often necessary for a number of keys of a same bunch, or even of several bunches, to be first tried in a sort of trial-and-error process, while on the other hand it anyway involves serious risks for the keys and, as a result, even the corresponding motor-vehicles to be stolen.

It would therefore be quite desirable, and it is actually a main purpose of the present invention, to do away with all such drawbacks in connection with the keeping of the keys, while enabling the same keys to be easily and quickly traced and found when needed, as well as safely preventing them from being stolen.

According to the present invention, this aim is reached in a burglary-proof key-holding receptacle for motor-vehicles which is provided with the construction features and characteristics as substantially recited in the appended claims.

The features and advantages of the present invention will anyway be more readily understood from the description that is given below by way of non-limiting example with reference to the accompanying drawings, in which:
- Figure 1 is a partial perspective view of the application of a burglary-proof convenience receptacle according to the present invention to the door of a motor-vehicle;
- Figure 2 is a perspective view of a first embodiment of a burglary-proof convenience receptacle according to the present invention, illustrated in a partially open condition;
- Figures 3 and 4 are schematical views of the receptacle of Figure 2 as shown frontally and laterally, respectively, and in a closed condition;
- Figure 5 is a perspective view of a constructional variant of the receptacle of Figure 2, as shown in a partially open condition;
- Figure 6 is a schematical side view of the receptacle of Figure 5, as shown in a closed condition;
- Figure 7 is a schematical side view of a constructional variant of the receptacle of Figure 6, as shown in a closed condition; and
- Figure 8 is a schematical side view of the burglary-proof convenience receptacle according to the present invention in a second embodiment thereof, as shown in a closed condition.

The above listed Figures are shown to schematically illustrate a burglary-proof convenience receptacle according to the present invention, which is generally indicated at 10 and is used to hold motor-vehicle keys, in particular at the premises of dealers of either new motor-vehicles (such as in the case of concessionary agents, for instance) and/or used motor-vehicles, wherein such a receptacle is adapted to be applied in the respective motor-vehicle in the manner that will be described in greater detail further on, where it will then be used to solely hold the ignition and driving key of the motor-vehicle which it belongs to.

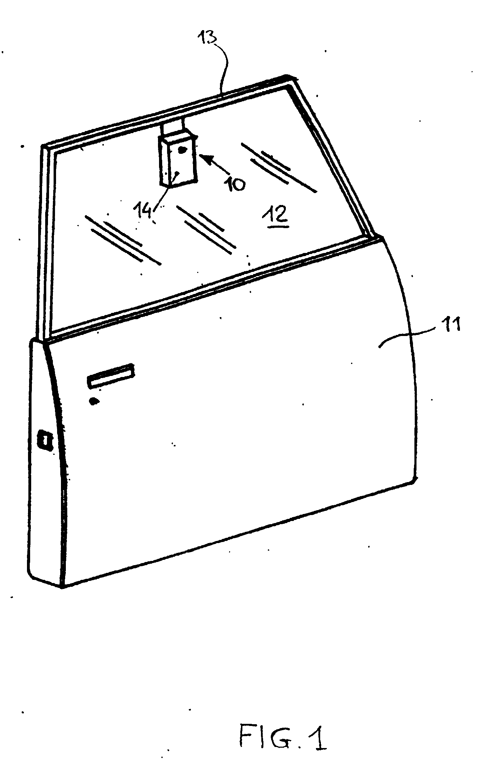

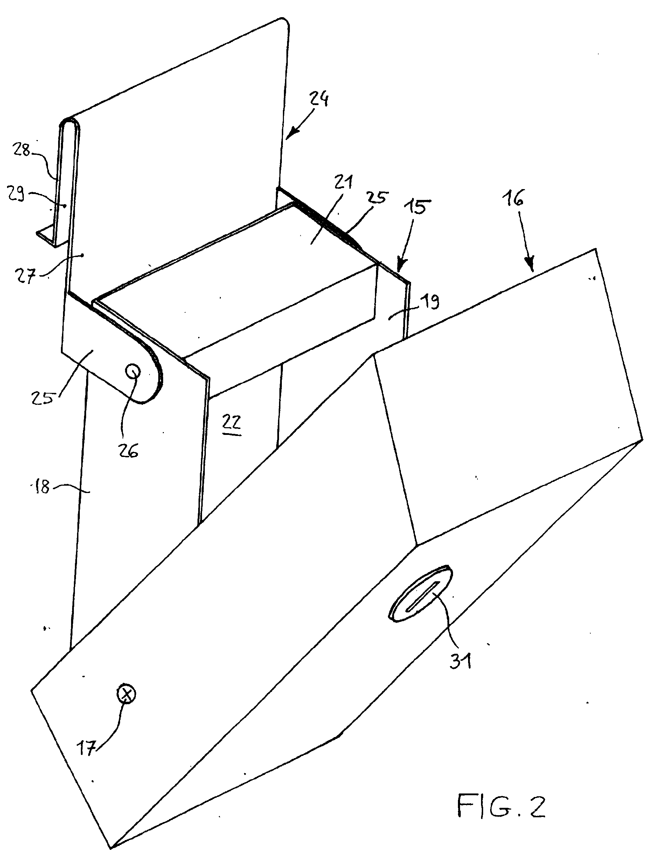

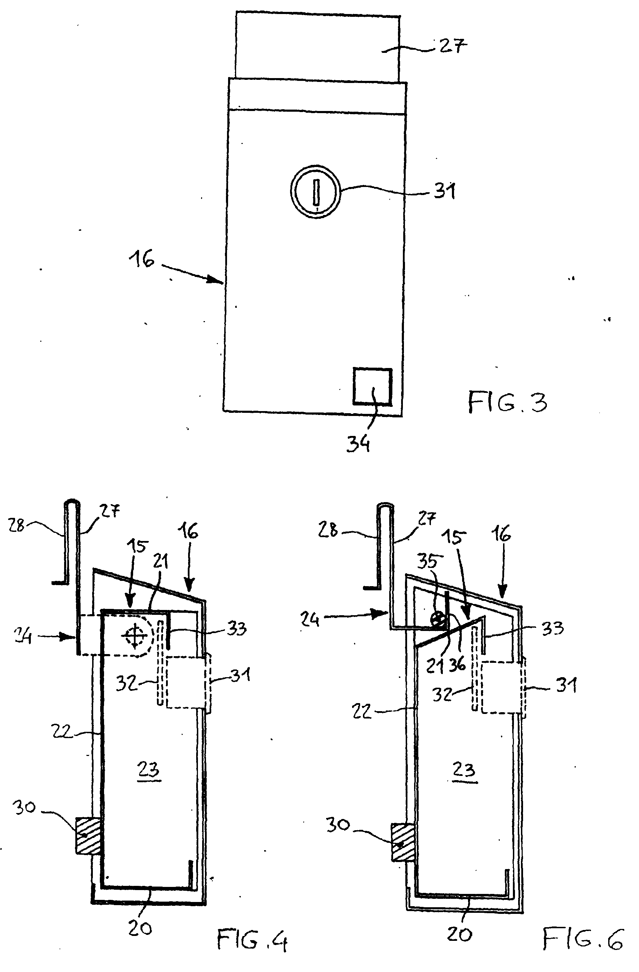

Referring now to Figure 1, it can be noticed that the receptacle 10, which holds the ignition and driving key of a motor-vehicle that has been previously introduced therein, is applied to the door 11 of a motor-vehicle (not shown) by removably inserting it between the upper portion of the window-pane 12 and the opposite peripheral frame 13 of said door, so as to enable it to remain seated inside the motor-vehicle, where it can then only be accessed to by first opening the door 11 of the motor-vehicle and then the lid 14 of the same receptacle through the use of corresponding keys. Figures 2, 3 and 4, in particular, are shown to illustrate the receptacle according to the present invention in a first embodiment thereof, in which it can be noticed that such a receptacle is substantially constituted by a key-holding case 15 in a box-like shape, in which the ignition and driving key of the related motor-vehicle is placed in view of being then picked up when needed, and a front enclosing cover or lid 16 that is hinged by means of pins 17 on to said case, for instance at the lower portion thereof, so as to be able to be displaced from an opened position (see Figure 2), in which said cover is displaced forwards on the front of the case 15 so as to enable access to be gained to the interior thereof in view of placing the key therein or picking up the key therefrom, to a closed position, in which said cover is displaced backwards over the case (see Figures 3 and 4), thereby fully enclosing it and preventing access from being gained to its interior, and vice-versa.

In particular, the key-holding case 15 is open on its front side and is made of a metal material (or a plastic material) that is bent and shaped so as to define two mutually opposing and spaced side walls 18 and 19, a lower or bottom wall 20 and an upper or top wall 21, which are all joined to a common back wall 22 so as to delimit at least an inner key-holding chamber 23.

The key-holding case 15 is hinged to an attachment bracket 24 adapted to enable the burglary-proof convenience receptacle to be applied on to the door of the motor-vehicle, wherein said bracket is shaped with a pair of mutually opposing and spaced shanks 25 that can be adapted against the related side walls 18 and 19 of said case by means of corresponding pins 26, said shanks blending then orthogonally into a plane plate 27 that is bent backwards so as to form a plane plate portion 28 extending parallelly thereto and slightly spaced therefrom by a gap 29 having a width that is larger than the thickness of the window-pane of the door 11 of the motor-vehicle, so as to enable said window-pane to be inserted in said gap when the burglary-proof receptacle according to the present invention is applied to the same door. In this application condition, furthermore, said case 15 comes to rest against the window-pane via a rubber grommet 30 which, duly attached to the rear side of the back wall 22 of the same case, therefore prevents the glass pane from being imparted damages by the same case resting against it. The front enclosing cover 16 is in turn made of the same material as the one used for the case 15 and is also shaped in the same way as said case, however to a larger size than said case so as to enable said cover to fit over said case when displaced from its opened position to its closed position, and vice-versa.

Such an enclosing cover 16 is provided on its front side with a lock 31 for the corresponding key to be introduced therein, said lock being connected with a latch 32 on the rear side that is capable of engaging and disengaging a corresponding bent front portion 33 of the case 15 so as to cause the burglary-proof receptacle according to the present invention to be closed and opened, respectively. It may also be provided with an appropriately shaped front zone 34 adapted to enable such labels or plates as generally used to identify the car model or the dealer to be applied thereupon. In this manner, thanks to the afore said appropriately shaped attachment bracket 24 linked in an articulated manner to the case 15, it is possible for the burglary-proof receptacle according to the present invention to be most easily and quickly installed, upon introducing the ignition and driving key belonging to the related motor-vehicle in its interior, in the interior of the motor-vehicle itself by slightly lowering to this purpose the window-pane of the door 11 of the corresponding motor-vehicle and then applying the same receptacle in position in the afore illustrated manner, no possibility existing then for said receptacle to be acceded to, ie. reached from the outside of the vehicle, while at the same time enabling the keys of each motor-vehicle to be so immediately traced and found, and further effectively preventing such keys and, as a result, the related motor-vehicles from being possibly stolen.

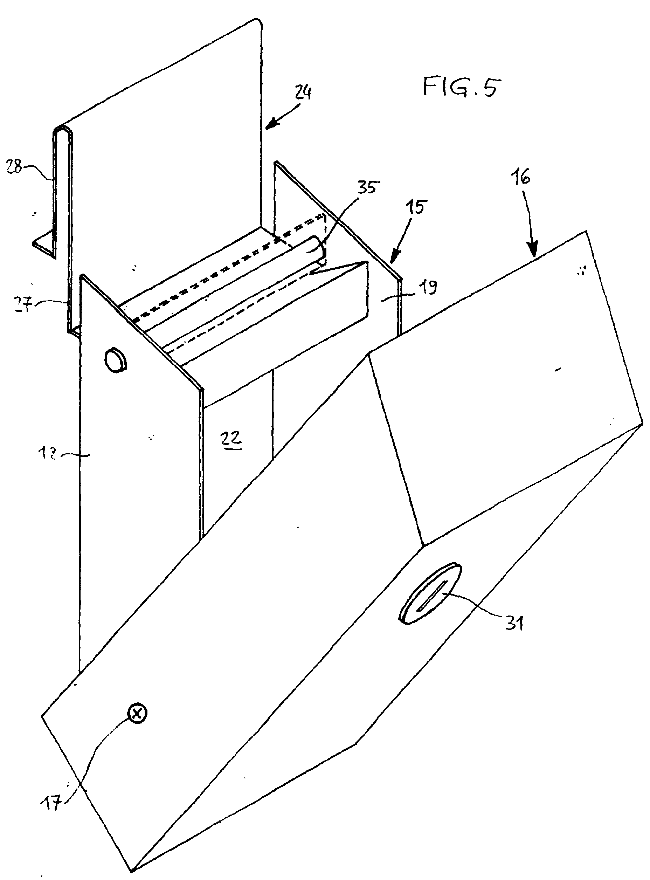

Figures 5 and 6 can be now noticed to illustrate a constructive variant of the burglary-proof key-holding receptacle according to the present invention, which is substantially similar to the above described one, except for the fact that, in this case, the case 15 is provided with a single elongated pin 35 extending transversally, which is caused to be engaged by a corresponding bent terminal portion 36 of the plane plate 28 of the attachment bracket 24, which can therefore be hooked on with its free end to the window-pane of the door 11 of the motor-vehicle in the same manner as described above.

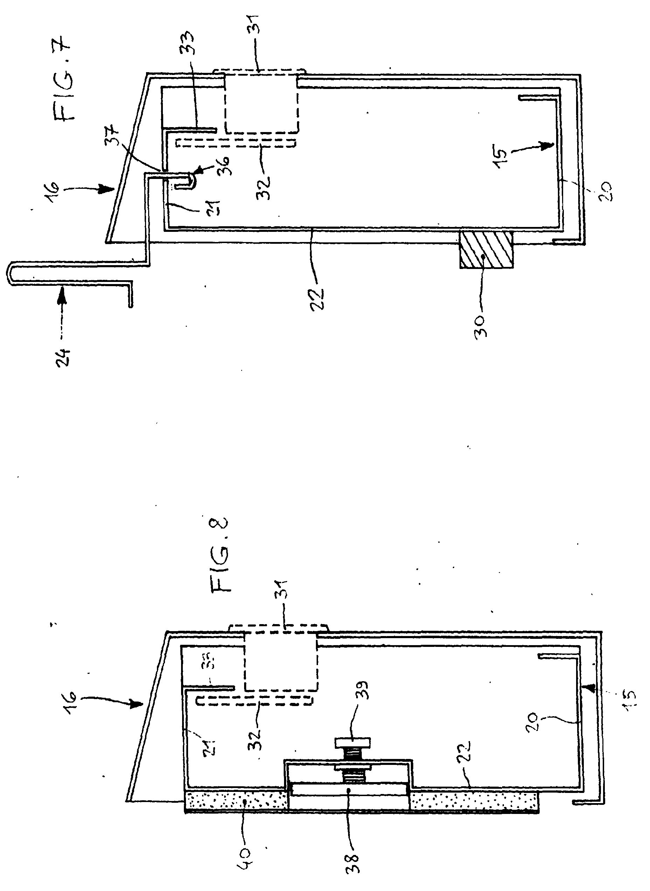

Figure 7 can again be noticed to illustrate a further constructive variant of the burglary-proof key-holding receptacle according to the present invention, in which it can be noticed to be substantially similar to the one illustrated in Figure 6, except for the fact that, in this case, it is not provided with said transversal pin 35, while its terminal portion 36, which is bent in a different manner, engages a corresponding upper aperture 37 of the case 15, thereby bringing about a loosable connection of the latter with the attachment bracket 24 and, therefore, enabling the receptacle itself to be applied on to the door 11 of the motor-vehicle in the afore described manner. It will be appreciated that, according to the invention, it is also possible for said case and said bracket to be loosably joined with each other in other manners than the afore described ones, which have been considered here to merely indicative purposes, without departing from the scope of the present invention.

Finally, Figure 8 is shown to illustrate a second embodiment of the burglary-proof key-holding receptacle for motor-vehicles according to the present invention, which is substantially similar to the afore described one except for the fact that, in this case, the attachment bracket 24 has been eliminated, while to the purpose of applying the case 15 against the window-pane of the door 11 of the motor-vehicle there has been provided a magnet 38 arranged on the rear of the back wall 22 of said case, wherein the position of such a magnet is adjustable axially with respect to the opposite glass pane of the door by means of an adjusting screw 39, said magnet being associated with a thin elasticized film 40 applied on to the rear surface of the case 15 facing such a glass pane, so that it can act as a sucker, thereby enabling the same case to be applied against said glass pane or any other suitable metal surface inside the motor-vehicle owing to the combined effect of the adhering action of said magnet and said sucker against the corresponding application surface.

It will of course be readily appreciated that the burglary-proof key-holding receptacle according to the present invention can also be provided with a combination of the flange, magnet and sucker application systems in view of anyway enabling it to be installed in the interior of motor-vehicles, without departing from the scope of the present invention.

Furthermore, the burglary-proof key-holding receptacle according to the present invention can in a most advantageously manner be coated with the use of not only more or less traditional paint systems adapted to impart aesthetically appealing finishes, but also special types of coatings adapted to prevent metal parts of the same burglary-proof receptacle from possibly scratching or otherwise damaging the glass panes of the motor-vehicles.

Finally, the burglary-proof key-holding receptacle according to the invention may also be associated with appropriate alarm devices adapted to emit sound or light warning signals in the presence of attempts being made at tampering with or breaking through the glass pane of the motor-vehicle door in view of gaining access to the same receptacle, said devices being for instance constituted by sensors capable of detecting any displacement of the related glass pane, and being capable of indicating any possible situation in which said glass pane is detected to be broken, displaced or tampered with, through the generation of corresponding alarm signals that are transmitted by a transmitter associated with said sensors to a receiver arranged in appropriate locations in the premises of the firm.

## Claims

1. Burglary-proof key-holding receptacle for motor-vehicles, adapted in particular for use by car dealers selling either new motor-vehicles (such as concessionary agents) and/or used motor-vehicles comprising glazed doors, wherein such receptacle is constituted by at least a box-like case, which the keys are capable of being stored in and retrieved from, and a box-like enclosing cover provided thereabove and linked in an articulated manner with said case so as to be capable of being opened and closed with respect to the same case through a key-operated lock, **characterized in that** it is provided with support means (24; 38, 40) co-operating with said case (15) and adapted to removably apply said case jointly with said enclosing cover (16) to the interior of each motor-vehicle.

2. Burglary-proof key-holding receptacle according to claim 1, **characterized in that** said support means comprise at least a shaped bracket (24) provided with a pair of shanks (25), linked in an articulated manner with said case (15) and joined through a plane plate (27) that is profiled so as to be able to loosably fit against the glass pane of the door (11) of each motor-vehicle.

3. Burglary-proof key-holding receptacle according to claim 2, **characterized in that** said shaped bracket (24) is provided with a terminal portion (36) that is so bent as to be able to engage a corresponding upper aperture (37) of said case (15).

4. Burglary-proof key-holding receptacle according to claim 1, **characterized in that** said support means comprise at least a magnet (38) and an elasticized film (40) acting as a sucker, which are provided on the rear side of said case (15) and are adapted to be loosably applied on to the interior of each motor-vehicle.

5. Burglary-proof key-holding receptacle according to claim 4, **characterized in that** said magnet (38) is associated with adjustment means (screw 39) for adjusting its axial distance to the corresponding application surface inside each motor-vehicle.

6. Burglary-proof key-holding receptacle according to claim 5, **characterized in that** it is associated with alarm means adapted to emit warning signals in the presence of attempts being made at attaining to the receptacle fraudulently.
